# EUROPEAN PATENT APPLICATION

(11) **EP 4 394 989 A1**
(43) Date of publication of application: **03.07.2024**
(21) Application number: 22956358.0
(22) Date of filing: 26.12.2022
(51) Int. Cl.: H01M 10/0569, H01M 10/0525

(54) **LOW TEMPERATURE-TYPE LITHIUM-ION BATTERY ELECTROLYTE SOLUTION AND PREPARATION METHOD THEREFOR, AND LITHIUM-ION BATTERY**

(30) Priority: 24.08.2022 CN 202211016568
(71) Applicant: HUBEI WANRUN NEW ENERGY TECHNOLOGY CO., LTD., Shiyan, Hubei 442500 (CN)
(72) Inventor: FANG, Chun, Shiyan, Hubei 442500 (CN); LIU, Shiqi, Shiyan, Hubei 442500 (CN); CHENG, Fangyuan, Shiyan, Hubei 442500 (CN); ZOU, Yuqian, Shiyan, Hubei 442500 (CN)
(74) Representative: Studio Torta S.p.A.
(86) International application number: PCT/CN2022/141945
(87) International publication number: WO 2024/040826

(57) **Abstract**

The present disclosure relates to the technical field of Lithium Ion Batteries, and in particular to a low-temperature Lithium Ion Battery electrolyte and a preparation method thereof, and a Lithium Ion Battery. The low-temperature Lithium Ion Battery electrolyte includes an electrolyte salt and an organic solvent; and the organic solvent includes fluorocarboxylate ester, fluorocarbonate ester, and 1,3-dioxolane. The fluorocarboxylate ester has a low freezing point, and is suitable for being used as a low-temperature electrolyte solvent; the fluorocarbonate ester is used as a co-flux, and is mixed with the fluorocarboxylate ester to adjust low-temperature performance and film-forming property of the electrolyte; and battery impedance is significantly reduced after the 1,3-dioxolane with a low freezing point and viscosity is introduced. The low-temperature Lithium Ion Battery electrolyte of the present disclosure may effectively improve the conductivity of lithium ions at low temperatures, which is conducive to the performance of the capacity of the Lithium Ion Battery at low temperatures, in particular, the discharge specific capacity and capacity retention of the lithium iron phosphate Lithium Ion Battery at low temperatures may be improved.

## Description

### Cross-Reference to Related Application

This application claims priority to Chinese Patent Application No. 202211016568.3 filed on August 24, 2022 and entitled "A Low-Temperature Lithium Ion Battery Electrolyte and a Preparation Method thereof, and a Lithium Ion Battery", the disclosure of which is hereby incorporated by reference in its entirety.

### Technical Field

The present disclosure relates to the technical field of lithium ion batteries, and in particular to a low-temperature Lithium Ion Battery electrolyte and a preparation method thereof, and a lithium ion battery.

### Background

With the growing application range of Lithium Ion Batteries (LIBs), especially applications in the fields of electric vehicles, aerospace, and military, higher requirements for the low-temperature charging and discharging performance of the batteries are proposed. However, there are still many technical challenges to improve the energy storage performance and cycle stability of the Lithium Ion Batteries at low temperatures. Easy solidification and high impedance of carbonate-based commercial electrolytes at low temperatures limit further application of the Lithium Ion Batteries in the field of low-temperature electric vehicles. Therefore, the optimization of the electrolytes has become one of the hot research topics to improve the low-temperature performance of the Lithium Ion Batteries. In numerous cathode materials, because of high safe performance and low cost, lithium iron phosphate is widely applied to the field of electric vehicles, but the low-temperature performance needs to be improved due to its low conductivity. Therefore, for the lithium iron phosphate as a lithium ion cathode, modification research on an adaptive low-temperature electrolyte of the lithium iron phosphate has certain market prospects.

Patent 202111011044.0 discloses a low-temperature Lithium Ion Battery electrolyte. For a high nickel ternary cathode, specifically disclosed that the electrolyte consists of Lithium Difluorooxalato Borate (LiDFOB) and a mixed solvent, the concentration of the Lithium Difluorooxalato Borate (LiDFOB) is 0.8-1.5 mol/L, and the mixed solvent includes linear carbonate, cyclic carbonate, and γ-butyrolactone. In the technical solution, the melting point of the electrolyte is reduced by adding the organic solvent γ-butyrolactone with a low melting point to the basic solvent carbonate, such that the low-temperature performance of the Lithium Ion Batteries can be improved, the electrochemical performance of the Lithium Ion Batteries at low temperatures is improved, but there is room for improvement in the low temperature resistance of lithium ions.

In view of this, the present disclosure is especially proposed.

### Summary

A first objective of the present disclosure is to provide a low-temperature Lithium Ion Battery electrolyte, to effectively improve the discharge specific capacity and capacity retention of a Lithium Ion Battery at low temperatures.

A second objective of the present disclosure is to provide a method for preparing the low-temperature Lithium Ion Battery electrolyte. The method is simple in step, strong in operability, and convenient in actual promotion and large-scale application.

A third objective of the present disclosure is to provide a Lithium Ion Battery, including the low-temperature Lithium Ion Battery electrolyte, which has excellent electrochemical performance at low temperatures.

In order to implement the above objectives of the present disclosure, the following technical solutions are used.

The present disclosure provides a low-temperature Lithium Ion Battery electrolyte, including an electrolyte salt and an organic solvent.

The organic solvent includes fluorocarboxylate ester, fluorocarbonate ester, and 1,3-dioxolane (DOL).

Further, the fluorocarboxylate ester includes Diethyl Fluoromalonate (DEFM).

Further, the fluorocarbonate ester includes 4-Fluoro-1,3-dioxolan-2-one (FEC).

Further, the electrolyte salt includes Lithium bis(Trifluoromethanesulphonyl)lmide (LiTFSI) and/or lithium (trifluoromethanesulphonyl)imide.

Preferably, the electrolyte salt includes Lithium bis(Trifluoromethanesulphonyl)lmide.

Further, in the low-temperature Lithium Ion Battery electrolyte, a volume percentage of the fluorocarboxylate ester is greater than 40%.

Preferably, in the low-temperature Lithium Ion Battery electrolyte, a volume percentage of the fluorocarboxylate ester is 50%-70%.

Further, a volume ratio of the fluorocarboxylate ester, the fluorocarbonate ester, and the 1,3-dioxolane is 90-40:5-50:5-30.

Preferably, the volume ratio of the fluorocarboxylate ester, the fluorocarbonate ester, and the 1,3-dioxolane is 55-65:15-25:15-25.

Further, in the low-temperature Lithium Ion Battery electrolyte, a concentration of the electrolyte salt is 1.0-5.0 mol/L.

Preferably, in the low-temperature Lithium Ion Battery electrolyte, the concentration of the electrolyte salt is 1.5-2.5 mol/L.

The present disclosure further provides a method for preparing the low-temperature Lithium Ion Battery electrolyte described above, and the low-temperature Lithium Ion Battery electrolyte is obtained by uniformly mixing an organic solvent and an electrolyte salt.

The present disclosure further provides a Lithium Ion Battery, including the low-temperature Lithium Ion Battery electrolyte.

Further, a cathode material of the Lithium Ion Battery is lithium iron phosphate.

Compared with the related art, the present disclosure has the following beneficial effects.

(1) In the low-temperature Lithium Ion Battery electrolyte of the present disclosure, the fluorocarboxylate ester is used as a main solvent, and the fluorocarbonate ester and the 1,3-dioxolane are used as co-fluxes, in combination with the Lithium bis(Trifluoromethanesulphonyl)lmide, such that the conductivity of lithium ions at low temperatures may be significantly improved, facilitating the performance of the capacity of the Lithium Ion Battery at low temperatures.

(2) In the low-temperature Lithium Ion Battery electrolyte of the present disclosure, by using the Lithium bis(Trifluoromethanesulphonyl)lmide as the electrolyte salt, a stable inorganic component interface phase may be formed at a cathode; and the 4-Fluoro-1,3-dioxolan-2-one may form a stable inorganic component interface phase at an anode, such that the cycle stability of a battery at a low temperature (-30 °C) may be significantly improved.

(3) By means of the low-temperature Lithium Ion Battery electrolyte of the present disclosure, the discharge specific capacity and capacity retention of a lithium iron phosphate Lithium Ion Battery at low temperatures may be significantly improved, a LiFePO₄/Li battery assembled by using the lithium iron phosphate Lithium Ion Battery electrolyte as the electrolyte can operate in a low-temperature environment of -30 °C, and 0.2C discharge specific capacity can reach 90 mAh/g.

### Brief Description of the Drawings

In order to more clearly illustrate the specific implementations of the present disclosure or the technical solutions in the related art, the drawings used in the description of the specific implementations or the related art will be briefly described below. It is apparent that the drawings in the following descriptions are some implementations of the present disclosure. Other drawings can be obtained from those skilled in the art according to these drawings without any creative work.

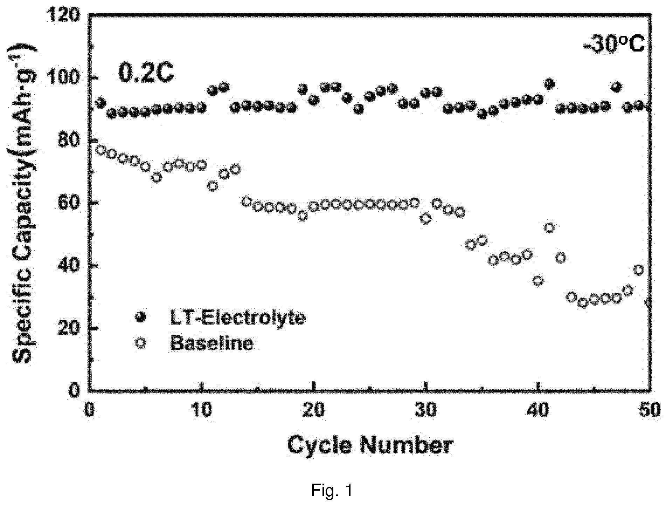

Fig. 1 is a comparison diagram of the discharge specific capacity of a battery, which is prepared by using a low-temperature Lithium Ion Battery electrolyte of Embodiment 7 and a Lithium Ion Battery electrolyte of Comparative embodiment 5, at a charging and discharging voltage of 2.7-4.2 V and at -30 °C.

### Detailed Description of the Embodiments

The technical solutions of the present disclosure will be clearly and completely described below with reference to the drawings and specific implementations, but it will be appreciated by those skilled in the art that the embodiments described below are a portion of the embodiments of the present disclosure and not all of the embodiments, and are used only for the purpose of describing the present disclosure and should not be considered as limiting the scope of the present disclosure. Based on the embodiments in the present disclosure, all other embodiments obtained by those of ordinary skill in the art without creative work shall fall within the protection scope of the present disclosure. If specific conditions are not indicated in the embodiments, the implementations are carried out in accordance with the conventional conditions or the conditions recommended by manufacturers. Reagents or instruments used are conventional products that may be purchased commercially if the manufacturers are not specified.

A low-temperature Lithium Ion Battery electrolyte and a preparation method thereof, and a Lithium Ion Battery of embodiments of the present disclosure are described in detail below.

In some implementations, the present disclosure provides a low-temperature Lithium Ion Battery electrolyte, including an electrolyte salt and an organic solvent.

The organic solvent includes fluorocarboxylate ester, fluorocarbonate ester, and 1,3-dioxolane.

In the low-temperature Lithium Ion Battery electrolyte of the present disclosure, by using the fluorocarboxylate ester as a main solvent, and the fluorocarbonate ester and the 1,3-dioxolane as co-fluxes, the conductivity of lithium ions at low temperatures may be effectively improved, facilitating the performance of the capacity of the Lithium Ion Battery at low temperatures.

For the fluorocarboxylate ester, carboxylate ester is low in melting point, and fluoro may further reduce a freezing point of the carboxylate ester, such that the fluorocarboxylate ester is low in melting point, and a freezing point of the electrolyte is reduced. Therefore, ionic conductivity of the electrolyte at low temperatures may be improved, so as to improve the low-temperature performance of a battery; and the introduction of fluorine facilitates the improvement of the performance of an interface.

Since the film-forming property of the fluorocarboxylate ester is relatively poor, the film-forming property of the electrolyte is adjusted by using the fluorocarbonate ester as the co-flux and mixing with the fluorocarboxylate ester.

The impedance of the Lithium Ion Battery is significantly reduced after the 1,3-dioxolane (DOL) with a low freezing point and viscosity is introduced. Therefore, the discharge specific capacity and capacity retention of the Lithium Ion Battery, especially a lithium iron phosphate Lithium Ion Battery, at low temperatures are improved.

In some implementations of the present disclosure, the fluorocarboxylate ester includes Diethyl Fluoromalonate.

The Diethyl Fluoromalonate (DEFM) is used as a solvent of the electrolyte, binding energy between the Diethyl Fluoromalonate and lithium ions is relatively low, facilitating an deintercalation process of the lithium ions at low temperatures.

In some implementations of the present disclosure, the fluorocarbonate ester includes 4-Fluoro-1,3-dioxolan-2-one (FEC).

In some implementations of the present disclosure, the electrolyte salt includes Lithium bis(Trifluoromethanesulphonyl)lmide and/or lithium (trifluoromethanesulphonyl)imide; and preferably, the electrolyte salt includes Lithium bis(Trifluoromethanesulphonyl)lmide (LiTFSI).

The Lithium bis(Trifluoromethanesulphonyl)lmide is soluble in a solvent at a high concentration, has a high HOMO energy level and a low LUMO energy level, and can be decomposed at a cathode/an anode electrolyte interface during first charging, so as to form an interface film with more inorganic components, such that the cycle stability of a battery at a low temperature (-30 °C) may be significantly improved. The Lithium bis(Trifluoromethanesulphonyl)lmide with an appropriate concentration has high ionic conductivity, such that a stable fluorine-containing interface film can be provided.

HOMO refers to highest occupied molecular orbital of molecules, and if the HOMO energy level is higher, it is easier for a substance to lose electrons. For the electrolyte, the HOMO energy level may be used to determine a decomposition sequence of components during charging, and the components with higher HOMO energy level are more easily oxidized to form a cathode electrolyte interface film, so as to prevent other components from being in direct contact with the electrolyte during the subsequent charging and discharging process, thereby suppressing side reactions at the cathode electrolyte interface. The LUMO energy level refers to lowest unoccupied molecular orbital of the molecules, and if the LUMO energy level is lower, it is easier for the substance to obtain the electrons. For the electrolyte, the LUMO energy level may be used to determine the decomposition sequence of components during discharging, and the components with lower LUMO energy level are more easily reduced to form an anode electrolyte interface film, so as to prevent direct contact between an electrode and the electrolyte during the subsequent charging and discharging process, thereby suppressing side reactions at the interface.

The organic solvent of the low-temperature Lithium Ion Battery electrolyte of the present disclosure includes fluorocarboxylate ester, 4-Fluoro-1,3-dioxolan-2-one, and 1,3-dioxolane. The fluorocarboxylate ester and the fluorocarbonate ester have low melting points, and can reduce the melting point of the electrolyte, such that the ionic conductivity of the electrolyte at low temperatures is improved. The HOMO energy level of the LiFSI is high, and thus can be preferably decomposed into a film on a cathode surface of the Lithium Ion Battery, so as to improve the stability of the cathode-electrolyte interface. The LUMO energy level of the 4-Fluoro-1 ,3-dioxolan-2-one is low, and thus can be preferably decomposed into a film on an anode surface of the Lithium Ion Battery, so as to improve the stability of the anode-electrolyte interface. Therefore, by means of the electrolyte of the present disclosure, the discharge specific capacity and capacity retention of the Lithium Ion Battery at a low temperature (-30 °C) may be improved.

In some implementations of the present disclosure, the low-temperature Lithium Ion Battery electrolyte includes the Lithium bis(Trifluoromethanesulphonyl)lmide, the Diethyl Fluoromalonate, the 4-Fluoro-1,3-dioxolan-2-one, and the 1,3-dioxolane.

In some implementations of the present disclosure, in the low-temperature Lithium Ion Battery electrolyte, a volume percentage of the fluorocarboxylate ester is greater than 40%.

In some implementations of the present disclosure, in the low-temperature Lithium Ion Battery electrolyte, the volume percentage of the fluorocarboxylate ester is 50%-70%. Typical but non-restrictive, for example, in the low-temperature Lithium Ion Battery electrolyte, the volume percentage of the fluorocarboxylate ester is 50%, 51%, 52%, 53%, 54%, 55%, 56%, 57%, 58%, 59%, 60%, 61%, 62%, 63%, 64%, 65%, 66%, 67%, 68%, 69%, or 70%, and the like. Preferably, in the low-temperature Lithium Ion Battery electrolyte, the volume percentage of the fluorocarboxylate ester is 55%-65%, more preferably 58%-62%.

In some implementations of the present disclosure, the volume ratio of the fluorocarboxylate ester, the fluorocarbonate ester, and the 1,3-dioxolane is 90-40:10-50:1-30. Typical but non-restrictive, for example, the volume ratio of the fluorocarboxylate ester, the fluorocarbonate ester, and the 1,3-dioxolane is 80:10:10, 70:15:15, 60:20:20, 50:25:25, 40:30:30, 80:10:5, 70:30:10, 60:10:5, 50:10:20, and the like. Preferably, the volume ratio of the fluorocarboxylate ester, the fluorocarbonate ester, and the 1,3-dioxolane is 55-65:15-25:15-25, more preferably, the volume ratio of the fluorocarbonate ester to the 1,3-dioxolane is 1:1.

In some implementations of the present disclosure, in the low-temperature Lithium Ion Battery electrolyte, the concentration of the electrolyte salt is 1.0-5.0 mol/L. Typical but non-restrictive, for example, in the low-temperature Lithium Ion Battery electrolyte, the concentration of the electrolyte salt is 1.0 mol/L, 1.5 mol/L, 2.0 mol/L, 2.5 mol/L, 3.0 mol/L, 3.5 mol/L, 4.0 mol/L, 4.5 mol/L, or 5.0 mol/L, and the like. Preferably, in the low-temperature Lithium Ion Battery electrolyte, the concentration of the electrolyte salt is 1.5-2.5 mol/L.

In some implementations, the present disclosure further provides a method for preparing the low-temperature Lithium Ion Battery electrolyte, and the low-temperature Lithium Ion Battery electrolyte is obtained by uniformly mixing an organic solvent and an electrolyte salt.

In some implementations of the present disclosure, the organic solvent is an anhydrous organic solvent. The method for preparing the anhydrous organic solvent includes: adding a dehydrating agent to the organic solvent, and allowing the mixture to stand for 2-4 days, so as to prepare the anhydrous organic solvent. Preferably, the dehydrating agent is a molecular sieve with a model being any one of 3Å, 4Å, and 5Å.

In some implementations, the present disclosure further provides a Lithium Ion Battery, including the low-temperature Lithium Ion Battery electrolyte.

In some implementations of the present disclosure, a cathode material of the Lithium Ion Battery is lithium iron phosphate.

In some implementations of the present disclosure, the Lithium Ion Battery includes a cathode plate, an anode plate, a separation film, and an electrolyte.

Wherein, the cathode plate is mainly prepared by a cathode active material, a conductive agent, a binder, and a dispersing agent, and the cathode active material is LiFePO₄.

The anode plate is a lithium piece.

The electrolyte is the low-temperature Lithium Ion Battery electrolyte.

In some implementations of the present disclosure, the conductive agent includes conductive carbon black.

In some implementations of the present disclosure, the binder includes polyvinylidene fluoride.

In some implementations of the present disclosure, the conductive agent includes N-methyl-2-pyrrolidone.

In some implementations of the present disclosure, the separation film includes a polypropylene microporous membrane.

A LiFePO₄/Li battery assembled by using the low-temperature Lithium Ion Battery electrolyte of the present disclosure can operate in a low-temperature environment of -30 °C, with 0.2C discharge specific capacity being 90 mAh/g, and can maintain stable cycle.

### Embodiments 1-12

The method for preparing the low-temperature Lithium Ion Battery electrolyte in each embodiment was the same, only the volume ratio of the solvents DEFM, FEC and DOL used in the low-temperature Lithium Ion Battery electrolyte and the concentration of the LiTFSI were different, and the volume ratio of the solvents and the concentration of the LiTFSI in each embodiment were shown in Table 1.

**Table 1**

| | Concentration of LiTFSI | DEFM:FEC:DOL (volume ratio) |
|---|---|---|
| Embodiment 1 | 1M | 90:5:5 |
| Embodiment 2 | 1M | 80:10:10 |
| Embodiment 3 | 1M | 60:20:20 |
| Embodiment 4 | 1M | 50:25:25 |
| Embodiment 5 | 2M | 90:5:5 |
| Embodiment 6 | 2M | 80:10:10 |
| Embodiment 7 | 2M | 60:20:20 |
| Embodiment 8 | 2M | 50:25:25 |
| Embodiment 9 | 3M | 90:5:5 |
| Embodiment 10 | 3M | 80:10:10 |
| Embodiment 11 | 3M | 60:20:20 |
| Embodiment 12 | 3M | 50:25:25 |

The method for preparing the low-temperature Lithium Ion Battery electrolyte included the following steps.

The Diethyl Fluoromalonate (DEFM), the fluorocarbonate ester (FEC), and the 1,3-dioxolane (DOL) were mixed by volume ratio in a glove box protected by inert gas, and a 3Å molecular sieve dehydrating agent was added after mixing, the mixture was allowed to stand for 2 days; and then the Lithium bis(Trifluoromethanesulphonyl)lmide (LiTFSI) was added, the concentration of the Lithium bis(Trifluoromethanesulphonyl)lmide (LiTFSI) was controlled, stirring was performed until the mixture is clear and transparent, and the low-temperature Lithium Ion Battery electrolyte was obtained after uniform mixing. Water content in the glove box was less than 0.1 ppm, and oxygen content was less than 0.1 ppm. The model of the 3Å molecular sieve dehydrating agent was Alfa L05335-250g.

### Comparative embodiments 1-5

The method for preparing the low-temperature Lithium Ion Battery electrolyte in each comparative embodiment was the same, and only the type and volume ratio of the organic solvents used in the Lithium Ion Battery electrolyte, and the type and concentration of the electrolyte salt were different. Details were shown in Table 2.

**Table 2**

| | Type and concentration of electrolyte salt | Type and volume ratio of organic solvents |
|---|---|---|
| Comparative embodiment 1 | LiPF₆, 1M | DEFM:FEC:DOL=60:20:20 |
| Comparative embodiment 2 | LiPF₆, 2M | DEFM:FEC:DOL=60:20:20 |
| Comparative embodiment 3 | LiPF₆, 3M | DEFM:FEC:DOL=60:20:20 |
| Comparative embodiment 4 | LiTFSI, 2M | EC:DEC=50:50 |
| Comparative embodiment 5 | LiPF₆, 1M | EC:DEC=50:50 |

| | | |
|---|---|---|
| EC refers to ethylene carbonate, and DEC refers to diethyl carbonate. | | |

A method for preparing a Lithium Ion Battery electrolyte included the following steps.

The organic solvents were mixed by volume ratio in the glove box protected by inert gas, the 3Å molecular sieve dehydrating agent was added after mixing, the mixture was allowed to stand for 2 days, then the electrolyte salt was added, uniform stirring was performed, the concentration of the electrolyte salt was controlled, and the Lithium Ion Battery electrolyte was obtained after uniform stirring. Water content in the glove box was less than 0.1 ppm, and oxygen content was less than 0.1 ppm. The model of the 3Å molecular sieve dehydrating agent was Alfa L05335-250g.

### Test embodiment 1

A battery was assembled by the low-temperature Lithium Ion Battery electrolyte of Embodiments 1-12 and the Lithium Ion Battery electrolyte of Comparative embodiments 1-5 together with a lithium iron phosphate cathode and a lithium iron phosphate anode, an electrochemical test was performed, and a test method included the following.

First, a cathode plate was prepared, a cathode active material was LiFePO₄, a conductive agent was conductive carbon black (SuperP, TimcalLtd.), a binder was polyvinylidene fluoride (PVDF, HSV900, Arkema), and a dispersing agent was N-methyl-2-pyrrolidone (NMP); and mixing and grinding were performed according to a mass ratio of LiFePO₄:SuperP:PVDF=7:2:1, the mixture was coated on an aluminum foil, an electrode plate was made through drying, rolling, and punching, and active substances on an electrode surface were controlled at 2-4 mg/cm². Then, a button cell was manufactured in a glove box filled with argon gas, an anode was a lithium piece, a polypropylene microporous membrane was a diaphragm, the electrolyte was changed to obtain different batteries for testing.

The electrochemical performance test used a NEWARE electrochemical tester. After being activated by cycling two times at 0.2C at room temperature, a battery was placed at -30 °C and allowed to stand for 2h, then low-temperature cycling was performed with 0.2C current density, a charging and discharging voltage range was 2.7-4.2 V, and test results were shown in Table 3. A comparison diagram of the discharge specific capacity of the low-temperature Lithium Ion Battery electrolyte of Embodiment 1 and the Lithium Ion Battery electrolyte of Comparative embodiment 5 at the charging and discharging voltage of 2.7-4.2 V and at -30 °C was shown in Fig. 1. The Lithium Ion Battery electrolyte of Comparative embodiment 5 was marked as Baseline, and the low-temperature Lithium Ion Battery electrolyte of Embodiment 7 was marked as LT-Electrolyte.

**Table 3**

| | Discharge specific capacity after 50 cycles at -30 °C (mAh/g) |
|---|---|
| Embodiment 1 | 61 |
| Embodiment 2 | 69 |
| Embodiment 3 | 77 |
| Embodiment 4 | 73 |
| Embodiment 5 | 81 |
| Embodiment 6 | 85 |
| Embodiment 7 | 90 |
| Embodiment 8 | 81 |
| Embodiment 9 | 71 |
| Embodiment 10 | 69 |
| Embodiment 11 | 78 |
| Embodiment 12 | 72 |
| Comparative embodiment 1 | 39 |
| Comparative embodiment 2 | 42 |
| Comparative embodiment 3 | 34 |
| Comparative embodiment 4 | 25 |
| Comparative embodiment 5 | 20 |

From Fig. 1, it might be seen that, at a low temperature of -30 °C, at a rate of 0.2C, and in 50 cycles, the discharge specific capacity and cycle stability of a battery assembled by using the low-temperature Lithium Ion Battery electrolyte of the present disclosure were significantly better than that using the Lithium Ion Battery electrolyte of Comparative embodiment 5.

From Table 1, it might be seen that, when the solvent of the electrolyte was a mixed solvent of the Diethyl Fluoromalonate (DEFM), the fluorocarbonate ester (FEC), and the 1,3-dioxolane (DOL), and the lithium salt was the Lithium bis(Trifluoromethanesulphonyl)lmide (LiTFSI), the discharge specific capacity was the highest.

By comparing Embodiments 1-12, it might be learned that, Embodiment 7 had the best effect. At the low temperature of -30 °C, the discharge specific capacity of a LiFePO₄/Li battery was 90 mAh/g, and capacity retention of 50 cycles approaches 100%, which was much higher than other comparative embodiments. From comparison of Embodiments 1-12, it might be seen that, when the solvent was the mixed solvent of the Diethyl Fluoromalonate (DEFM), the 4-Fluoro-1,3-dioxolan-2-one (FEC), and the 1,3-dioxolane (DOL), the discharge specific capacity was the highest at 20% 4-Fluoro-1,3-dioxolan-2-one and 20% 1,3-dioxolane, this might be due to the fact that a LiF-rich inorganic interface formed at an anode was more stable at low temperatures because of the FEC, and the lower DOL viscosity facilitated the reduction of the ionic conductivity of the electrolyte at low temperatures. From comparison of Embodiments 1-12 with Comparative embodiments 1-4, it might be seen that the performance was optimal when the lithium salt was the LiTFSI and the concentration was 2M, this might be due to the fact that a more stable F-containing inorganic component interface film was formed by first decomposing the LiTFSI, and the electrolyte had the best viscosity and conductivity when the concentration was 2M.

Through Comparative embodiments 1-4, it might be found that, when the LiTFSI was not contained, the effect that the solvent included the Diethyl Fluoromalonate (DEFM), the 4-Fluoro-1 ,3-dioxolan-2-one (FEC), and the 1,3-dioxolane (DOL) was also better than that of ordinary carbonate (basic electrolyte), this might be due to the fact that the mixed solvent had more excellent low-temperature conductivity and better film-forming property.

To sum up, through comparison, it was found that, compared with Comparative embodiment 5, the electrolyte using the Lithium bis(Trifluoromethanesulphonyl)lmide as the electrolyte salt and using the Diethyl Fluoromalonate (DEFM), the 4-Fluoro-1,3-dioxolan-2-one (FEC), and the 1,3-dioxolane (DOL) as the solvents might significantly improve the discharge specific capacity and capacity retention of the LiFePO₄/Li battery in a low-temperature environment of -30 °C. When DEFM:FEC:DOL=60:20:20, and the concentration of the LiTFSI was 2M, the discharge specific capacity and cycle stability of the battery were optimal. The assembled LiFePO₄/Li battery had the discharge specific capacity of 90 mAh/g at -30 °C, and was more stable.

Finally, it should be noted that, the above embodiments are merely for describing and not intended to limit the technical solutions of the present disclosure. Although the present disclosure has been described in detail with reference to the above embodiments, those of ordinary skill in the art should understand that, they can still make modifications to the technical solutions recited in the above embodiments or make equivalent replacements to a part or all of the technical features thereof; and the modifications or replacements do not cause essence of the corresponding technical solutions to depart from the scope of the technical solutions of the embodiments of the present disclosure.

## Claims

1. A low-temperature Lithium Ion Battery electrolyte, is characterized that the low-temperature Lithium Ion Battery electrolyte comprises an electrolyte salt and an organic solvent,
the organic solvent comprises fluorocarboxylate ester, fluorocarbonate ester, and 1,3-dioxolane.

2. The low-temperature Lithium Ion Battery electrolyte according to claim 1, is characterized that the fluorocarboxylate ester comprises Diethyl Fluoromalonate.

3. The low-temperature Lithium Ion Battery electrolyte according to claim 1, is characterized that the fluorocarbonate ester comprises 4-Fluoro-1,3-dioxolan-2-one.

4. The low-temperature Lithium Ion Battery electrolyte according to claim 1, is characterized that the electrolyte salt comprises Lithium bis(Trifluoromethanesulphonyl)lmide and/or lithium (trifluoromethanesulphonyl)imide; and
preferably, the electrolyte salt comprises Lithium bis(Trifluoromethanesulphonyl)lmide.

5. The low-temperature Lithium Ion Battery electrolyte according to claim 1, is characterized that in the low-temperature Lithium Ion Battery electrolyte, a volume percentage of the fluorocarboxylate ester is greater than 40%; and
preferably, in the low-temperature Lithium Ion Battery electrolyte, a volume percentage of the fluorocarboxylate ester is 50%-70%.

6. The low-temperature Lithium Ion Battery electrolyte according to claim 1, is characterized that a volume ratio of the fluorocarboxylate ester, the fluorocarbonate ester, and the 1,3-dioxolane is 90-40:5-50:5-30; and
preferably, the volume ratio of the fluorocarboxylate ester, the fluorocarbonate ester, and the 1,3-dioxolane is 55-65:15-25:15-25.

7. According to claim 1, is characterized that in the low-temperature Lithium Ion Battery electrolyte, a concentration of the electrolyte salt is 1.0-5.0 mol/L; and
preferably, in the low-temperature Lithium Ion Battery electrolyte, the concentration of the electrolyte salt is 1.5-2.5 mol/L.

8. A method for preparing the low-temperature Lithium Ion Battery electrolyte according to any one of claims 1 to 7, is characterized that the low-temperature Lithium Ion Battery electrolyte is obtained by uniformly mixing an organic solvent and an electrolyte salt.

9. A Lithium Ion Battery, is characterized that the Lithium Ion Battery comprises the low-temperature Lithium Ion Battery electrolyte according to any one of claims 1 to 7.

10. The Lithium Ion Battery according to claim 9, is characterized that the cathode material of the Lithium Ion Battery is lithium iron phosphate.
